Europäisches Patentamt

European Patent Office

Office européen des brevets

(19)

(11) Veröffentlichungsnummer: **0 156 293**
**B1**

(12) **EUROPÄISCHE PATENTSCHRIFT**

(45) Veröffentlichungstag der Patentschrift:
**01.06.88**

(51) Int. Cl.⁴: **B 62 K 25/08,** B 60 G 17/04

(21) Anmeldenummer: **85103190.6**

(22) Anmeldetag: **19.03.85**

(54) **Motorrad.**

(30) Priorität: **29.03.84 DE 3411561**

(43) Veröffentlichungstag der Anmeldung:
**02.10.85 Patentblatt 85/40**

(45) Bekanntmachung des Hinweises auf die Patenterteilung:
**01.06.88 Patentblatt 88/22**

(84) Benannte Vertragsstaaten:
**DE FR GB IT SE**

(56) Entgegenhaltungen:
**DE - A - 3 143 126**
**FR - A - 1 402 729**
**FR - A - 1 576 937**
**US - A - 2 869 685**
**US - A - 4 357 033**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Schier, Günther, Gernerstrasse 9, D-8000 München 19 (DE)**

(74) Vertreter: **Dexheimer, Rolf, Bayerische Motoren Werke Aktiengesellschaft Postfach 40 02 40 Petuelring 130 - AJ-31, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Motorrad, wie es im Oberbegriff des Hauptanspruchs beschrieben ist.

Beim Bremsen taucht ein Motorrad, bedingt durch die dynamische Achslastveränderung, vorne ein, wenn das Vorderrad über ein Feder-Dämpfungssystem am Motorradrahmen angeordnet ist. Aus der DE-A-3 202 740 geht ein bekanntes Motorrad hervor, bei dem dies verhindert werden soll. Während des Bremsvorganges verbindet hier ein herkömmliches Wegeventil den Gasdruckraum des Feder-Dämpfungssystems mit einem Druckspeicher. Der sich in dem Gasdruckraum aufbauende Druck wirkt dem Eintauchen des Motorrads entgegen. Der Nachteil dieser Lösung besteht darin, dass im Gasdruckraum, unabhängig von der Bremskraft und damit der Verzögerung des Motorrads, jeweils der gesamte Druck des Druckspeichers ansteht. Dadurch kann bei einer leichten Bremsung gerade das Gegenteil eintreten, nämlich ein Aufrichten des Motorrades.

Aufgabe der Erfindung ist es, ein gattungsgemässes Motorrad so weiterzuentwickeln, dass sich bei ihm ohne allzu grossen zusätzlichen Bauaufwand der Druck in dem Gasdruckraum in Abhängigkeit von der Bremskraft bzw. der Verzögerung des Motorrads aufbaut.

Die Aufgabe wird erfindungsgemäss mit den kennzeichnenden Merkmalen des Hauptanspruchs gelöst. Weitere vorteilhafte Ausgestaltungen ergeben sich aus den Unteransprüchen.

Bei dem erfindungsgemässen Motorrad wird im Gasdruckraum während des Bremsens immer genau so viel notwendiger Druck erzeugt, um ein vorderes Eintauchen des Motorrads zu verhindern. Verantwortlich hierfür ist im wesentlichen der Sperrschieber. Er öffnet und schliesst während des Bremsvorganges in abwechselnder Folge den Entlüftungskanal des Gasdruckraumes. Veranlasst wird er hierzu von den entgegengesetzten Kräften, die auf ihn wirken. Dabei handelt es sich einmal um die Kraft, die sich durch den Druck des Gasdruckraumes und der wirksamen Fläche des Sperrschiebers ergibt, und zum anderen um die entgegengerichtete Kraft aus Masse des Sperrschiebers und seiner Beschleunigung. Bei diesen Kräften stellt sich immer wieder ein Gleichgewicht ein, wobei der absolute Betrag der Kräfte der Verzögerung des Motorrades und damit der Bremskraft folgt.

Das Regelventil mit dem Sperrschieber lässt sich als kompaktes Bauteil ausführen. Es ist dabei vorteilhaft, wenn das Ventilgehäuse einerseits eine abgesetzte Durchgangsbohrung aufweist und der Sperrschieber als Schaftteil mit einem äusseren Ringbund ausgeführt ist. Der Sperrschieber lässt sich dann sowohl mit dem Schaftteil als auch mit dem Ringbund in der Durchgangsbohrung führen. Dabei kann die Durchgangsbohrung im Bereich ihres Durchmesserwechsels als Anschlag für den Sperrschieber dienen.

Steuert der Sperrschieber die Druckzuführung des Gasdruckraumes mit seinem Ringbund, so ist es zweckmässig, hier zwei im Abstand voneinander angeordnete Ringbunde vorzusehen. Die Versorgungsanschlüsse für die Druckversorgung des Gasdruckraumes münden dann zwischen diesen Ringbunden. Dadurch wird der Sperrschieber selbst in diesem Bereich nicht durch den Druck beaufschlagt.

Die notwendige Masse des Sperrschiebers lässt sich aufgrund der motorradspezifischen Daten errechnen. Bei seiner Auslegung wird man zweckmässigerweise den Normalzustand des Motorrads, also mit einem Fahrer mit durchschnittlichem Gewicht zugrunde legen. Da aber die meisten Motorräder auch einen Platz für einen Beifahrer vorsehen, verändern sich die Verhältnisse bei der Fahrt mit zwei Personen. Mit anderen Worten, die Masse des Sperrschiebers ist für diesen Fall zu klein. Die Erfindung sieht in einer vorteilhaften Ausgestaltung hierfür eine zusätzliche Trägheitsmasse vor, die auf den Sperrschieber wirkt. Fährt nur eine Person mit dem Motorrad, lässt sich diese Trägheitsmasse arretieren und damit ausser Kraft setzen.

In der nachfolgenden Beschreibung ist ein vorteilhaftes Ausführungsbeispiel näher erläutert und in der dazugehörigen Zeichnung dargestellt. Es zeigen:

Fig. 1 ein Motorrad, das erfindungsgemäss ausgerüstet ist;

Fig. 2 eine Einzelheit nach Fig. 1 im vergrösserten Massstab, nämlich das Regelventil, und

Fig. 3 ebenfalls in vergrössertem Massstab die Vorderradgabel des Motorrads nach Fig. 1.

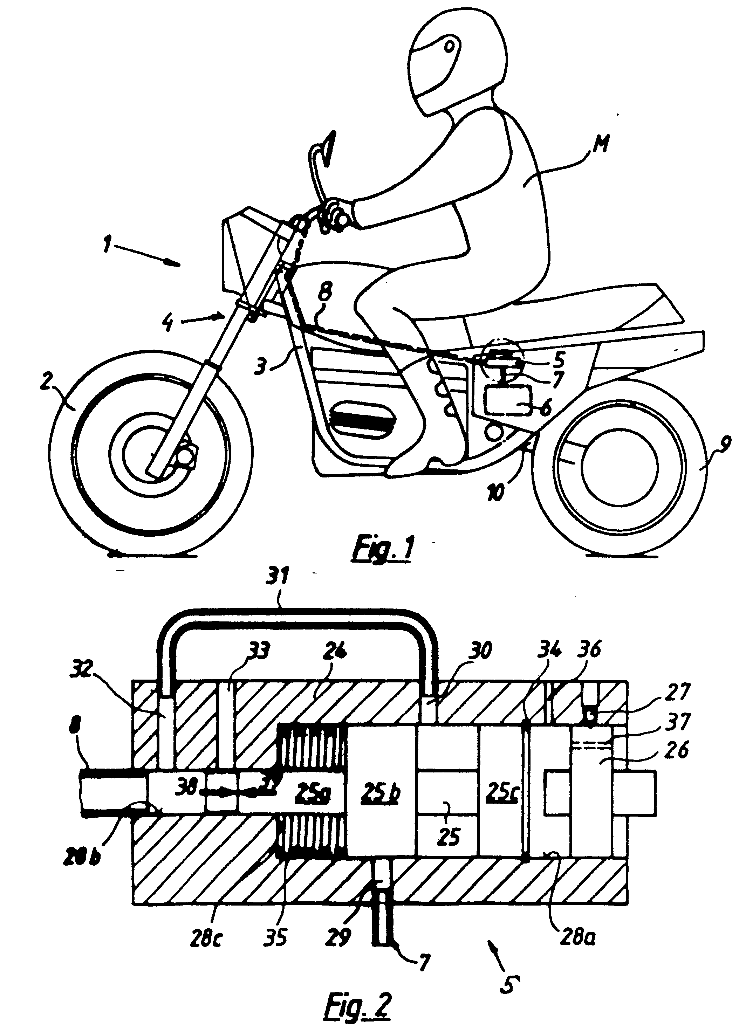

Fig. 1 lässt ein Motorrad 1 erkennen, auf dem ein Fahrer M sitzt. Das Motorrad weist ein Vorderrad 2 und einen Rahmen 3 auf. Ein Feder-Dämpfungssystem, insgesamt mit 4 bezeichnet, verbindet das Vorderrad 2 mit dem Rahmen 3. In seinem hinteren Abschnitt nimmt das Motorrad ein Regelventil 5 und einen Druckspeicher 6 auf. Eine Zuleitung 7 verbindet diese beiden Elemente. Der Druckspeicher 6 wird vorzugsweise über eine nicht dargestellte Pumpe versorgt, so dass in ihm immer der maximale Druck ansteht. Der Vollständigkeit halber sei erwähnt, dass das Motorrad 1 noch ein Hinterrad 9 aufweist, das über eine Schwinge 10 am Motorradrahmen 3 angelenkt ist.

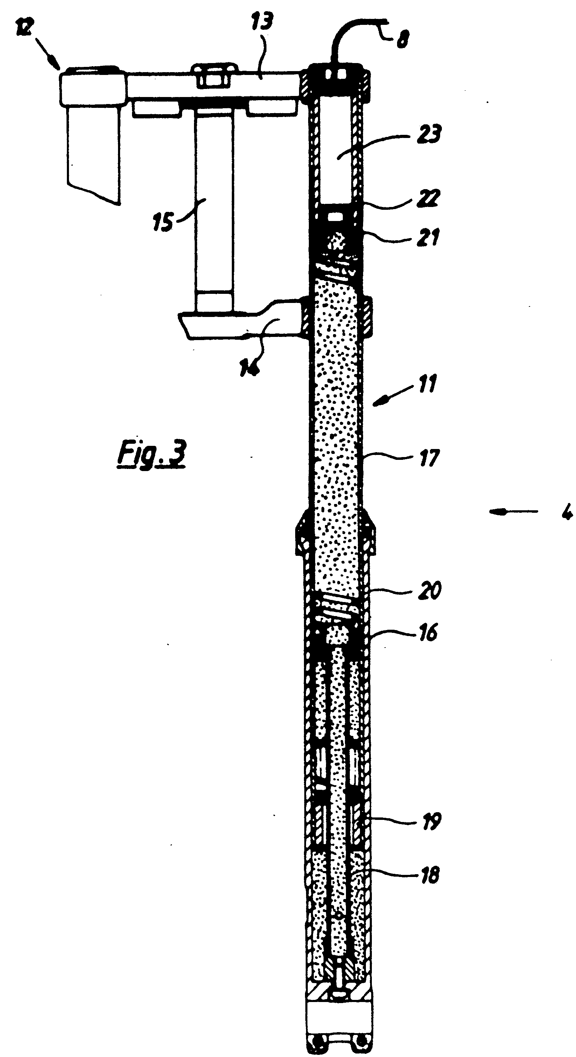

Fig. 3 zeigt das Feder-Dämpfungssystem 4 in Frontansicht. Es ist als sogenannte Telegabel ausgelegt mit zwei gleich aufgebauten Gabelholmen 11 und 12, die über Gabelbrücken 13 und 14 miteinander verbunden sind. Der Gabelholm 12 und die Gabelbrücke 14 sind der Einfachheit halber nur zum Teil gezeichnet. Die Gabelbrücken 13, 14 tragen einen Lenkkopf 15, über den das Dämpfungs-Federungssystem 4 mit dem Vorderrad 2 an dem Motorradrahmen 3 angelenkt ist. Der Gabelholm 11 setzt sich aus einem Gleitrohr 16 und einen darin teleskopartig verschiebbaren Standrohr 17 zusammen. Das Gleitrohr 16 nimmt die Lagerachse des Vorderrades 2 auf (nicht gezeichnet), an dem Standrohr 17 sind die Gabelbrücken 13 und 14 befestigt. Mit dem Gleitrohr 16 ist ein Innenrohr 18 starr verbunden. An seinem eingetauchten Ende weist das Standrohr 17 einen Kolben 19 auf, der zwischen dem Gleitrohr 16 und dem Innenrohr 18 gleitet. Eine Druckfeder 20 stützt sich einmal an einem an dem Standrohr 17 befestigten Ring 21 ab, zum anderen an einer bundartigen Schulter des Innenrohrs 18. Der Gabelholm ist bis zum Ring 21 mit Dämpfungsflüssigkeit gefüllt. Er entspricht, soweit er bis jetzt beschrieben ist, den üblichen Ausführungen, die allgemein bekannt sind.

Der Druckfeder 20 gegenüber liegend, ruht auf dem Ring 21 ein Kolben 22, der noch zusätzlich durch eine nicht gezeichnete Feder auf seinen Sitz gepresst sein kann. Über dem Kolben 22 erstreckt sich ein Gasdruckraum 23. In diesen mündet die Druckleitung 8 nach Fig. 1.

Das Regelventil 5 ist in Fig. 2 näher dargestellt. Es lässt ein Ventilgehäuse 24 erkennen mit einem Sperrschieber 25. Ausserdem nimmt das Ventilgehäuse 24 eine gleichachsige zum Sperrschieber 25 angeordnete Trägheitsmasse 26 auf, die über eine symbolisch angedeutete Schraube 27 im Ventilgehäuse 24 arretierbar ist. Zur Aufnahme des Sperrschiebers 25 und der Trägheitsmasse 26 weist das Ventilgehäuse 24 eine abgesetzte Bohrung auf, die von einem Abschnitt 28a mit grossem Durchmesser in einen Abschnitt 28b mit kleinerem Durchmesser übergeht. Beim Übergang der beiden Abschnitte bildet sich eine Schulter 28c aus. In den Bohrungsabschnitt 28a mündet ein Strömungskanal 29, an dem sich die Zuleitung 7 des Druckspeichers 6 (Fig. 1) anschliesst. Etwa gegenüberliegend führt ein weiterer Strömungskanal 30 aus dem Bohrungsabschnitt 28a heraus und geht in eine Druckleitung 31 über. Diese Druckleitung 31 kommuniziert mit einem Strömungskanal 32 im Ventilgehäuse 24, der wiederum in den Bohrungsabschnitt 28b mündet. Hinter dem Strömungskanal 32, in Richtung des Bohrungsabschnitts 28a, verbindet ein Entlüftungskanal 33 den Bohrungsabschnitt 28b mit der Aussenluft.

Der Sperrschieber 25 ist als länglicher Kolben ausgebildet und ragt mit einem Schaftteil 25a in den Bohrungsabschnitt 28b und ist dort auch geführt. Des weiteren weist der Sperrschieber im Bereich des Bohrungsabschnitts 28a zwei benachbarte und im Abstand voneinander angeordnete Ringbunde 25b, 25c auf. Mit diesen Ringbunden 25b, 25c ist der Sperrschieber in den Bohrungsabschnitt 28a geführt.

Der Sperrschieber 25 befindet sich in Fig. 2 in seiner Ruhelage. Er stösst dabei mit seinem Ringbund 25c an einen in das Ventilgehäuse 24 eingesetzten Anschlag 34 an. Eine Druckfeder 35 zwischen der Schulter 28c und dem Ringbund 25b drückt den Sperrschieber 25 noch zusätzlich gegen diesen Anschlag 34. In seiner Ruhelage verschliesst der Sperrschieber 25 mit seinem Ringbund 25b den Strömungskanal 29, während der Strömungskanal 30 zwischen den beiden Ringbunden 25b, 25c geöffnet bleibt. Der Schaftteil 25a endet in dieser Lage knapp hinter dem Entlüftungskanal 33 und gibt demnach diesen frei.

Des weiteren sei noch angemerkt, dass das Ventilgehäuse 24 Entlüftungsbohrungen 36 aufweist. Diese Entlüftungsbohrungen 36 können ergänzt oder ersetzt werden durch Entlüftungsbohrungen 37 in der Trägheitsmasse 26.

Bei einem normalen Einfedern des Vorderrades, beispielsweise beim Überfahren einer Bodenunebenheit, schiebt sich das Standrohr 17 (Fig. 3) in das Gleitrohr 16 hinein. Dadurch wird Dämpfungsflüssigkeit verdrängt, das in Richtung des Kolbens 22 ausweicht. Der Kolben 22 wird nach oben geschoben, da das in dem Druckraum 23 befindliche Gas über die Druckleitung 8 und den Entlüftungskanal 33 (Fig. 2) entströmen kann. Die Federung wird daher nicht beeinträchtigt.

Bremst jedoch der Fahrer M das Motorrad ab, erfährt der Sperrschieber 25 aufgrund seiner Trägheitsmasse eine Beschleunigung gegen die Kraft der Druckfeder 35. Der Sperrschieber 25 überfährt mit seinem Schaftteil 25a den Entlüftungskanal 33 und verschliesst ihn (in Fig. 2 gestrichelt dargestellt). Gleichzeitig mit dem Verschliessen des Entlüftungskanals 33 öffnet der Sperrschieber 25 mit seinem Ringbund 25b den Strömungskanal 29. Es kann nun Druckgas vom Druckspeicher über den Strömungskanal 29 in den Bohrungsabschnitt 28a fliessen. Von dort wird es über Strömungskanal 30, Druckleitung 31 und Strömungskanal 32 in die Druckleitung 8 und in den Gasdruckraum 23 (Fig. 3) geführt. In diesem baut sich ein Druck auf, der den Kolben 22 auf seinen Sitz presst. Andererseits erfährt das Motorrad 1 durch die dynamische Achslastveränderung eine in Achsrichtung des Gabelholmes 11 nach unten weisenden Kraft, die versucht, das Standrohr 17 in das Gleitrohr 16 hineinzuschieben. Da aber die Dämpfungsflüssigkeit nicht mehr durch Verschieben des Kolbens 22 ausweichen kann, taucht der Gabelholm 11 insgesamt nicht ein.

Der Druck des Gasdruckraumes steht aber auch an der Stirnfläche des Schaftteils 25a des Sperrschiebers 25 an. Je grösser nun dieser Druck wird, um so mehr wirkt er der Beschleunigungskraft des Sperrschiebers 25 entgegen. Dieser Zustand ist in Fig. 2 durch zwei Kraftpfeile 38 und 39 symbolisch dargestellt. Übersteigt nun die durch den Druckanstieg hervorgerufene Kraft 38 die Gegenkraft aus der Beschleunigung 39, so wird der Sperrschieber 25 wieder in seine Ruhelage zurückgedrängt. Er gibt den Entlüftungskanal 33 teilweise frei mit der Folge, dass der Druck im Gasdruckraum 23 abfällt. Dadurch überwiegt abermals die Beschleunigungskraft 39 und der Sperrschieber 25 verschliesst wieder den Strömungskanal 33. Dieses Wechselspiel hält während des gesamten Bremsvorganges an. Es ist leicht einzusehen, dass, je höher die Verzögerung des Motorrads 1 ist, also je stärker abgebremst wird, desto höher wird die Beschleunigung und damit die Beschleunigungskraft 39 des Sperrschiebers 25 und um so höher muss der Druckanstieg im Gasdruckraum 23 werden, um den Sperrschieber 25 in der vorbeschriebenen Weise zurückschieben zu können.

Andererseits ist die in der Telegabel wirkende Kraft nach unten um so grösser, je grösser die Verzögerung des Motorrads ist. Um ein Eintauchen des Gabelholmes 11 zu verhindern, muss aber auch der Druck im Gasdruckraum 23 entsprechend gross sein. Bei richtiger Auslegung und Dimensionierung der Bauteile stellt sich aufgrund der vorbeschriebenen Zusammenhänge jeweils der bei einer bestimmten Verzögerung des Motorrads 1 notwendige Druck im Gasdruckraum 23 ein. Die Verhältnisse und die Auslegung der Bauteile lassen sich für den Fachmann ohne weiteres mathematisch ermitteln.

In dem Ausführungsbeispiel ist eine Vorderradgabel herkömmlicher Bauart gezeigt. Es liegt jedoch auf der Hand, die Erfindung auch bei anders aufgebauten Vorderradaufhängungen einzusetzen. Insbesondere ist denkbar, dass der Gasdruckraum nicht in dem Gabelholm integriert, sondern in einem separaten Bauteil untergebracht ist.

## Patentansprüche

1. Motorrad, bei dem das Vorderrad über ein Feder-Dämpfungssystem am Motorradrahmen angeordnet ist und bei dem das Feder-Dämpfungssystem einen Gasdruckraum beaufschlagt, der beim Bremsen des Motorrades über ein Absperrorgan mit einem Druckspeicher verbunden wird, dadurch gekennzeichnet, dass das Absperrorgan als Regelventil (5) ausgelegt ist mit einem Entlüftungskanal (33) für den Gasdruckraum (23) und mit einem durch die Verzögerung des Motorrads (1) verschiebbaren, mit dem Gasdruckraum (23) in Druckverbindung stehenden Sperrschieber (25), der in seiner Ruhelage die Zuleitung (7) vom Druckspeicher (6) zum Gasdruckraum (23) sperrt und die Entlüftung des Gasdruckraumes (23) freigibt.

2. Motorrad nach Anspruch 1, dadurch gekennzeichnet, dass das Regelventil (5) ein Ventilgehäuse (24) aufweist mit Anschlussleitungen für die Druckgasversorgung und Entlüftung des Gasdruckraumes (23) und mit einer abgesetzten Durchgangsbohrung (28a, b), in die die Anschlussleitungen münden, und dass der Sperrschieber (25) als länglicher Kolben ausgebildet ist, mit einem Schaftteil (25a) und wenigstens einem äusseren Ringbund (25b, c) und mit diesen beiden Abschnitten in der abgesetzten Durchgangsbohrung (28a, b) geführt ist.

3. Motorrad nach Anspruch 2, dadurch gekennzeichnet, dass der Sperrschieber (25) wenigstens zwei äussere, mit Abstand voneinander angeordnete Ringbunde (25b, 25c) aufweist und dass der Sperrschieber mit dem Schaftteil (25a) die Entlüftung und mit den Ringbunden (25b, c) die Druckzuführung des Gasdruckraumes (23) steuert.

4. Motorrad nach Anspruch 2 oder 3, dadurch gekennzeichnet, dass der Sperrschieber (25) durch Federkraft (35) in Ruhelage gehalten ist.

5. Motorrad nach einem der Ansprüche 1–4, dadurch gekennzeichnet, dass der Sperrschieber (25) durch eine arretierbare Trägheitsmasse (26) beaufschlagbar ist.

6. Motorrad nach Anspruch 5, dadurch gekennzeichnet, dass die Trägheitsmasse (26) gleichachsig zum Sperrschieber (25) in der Durchgangsbohrung (28a, b) des Ventilgehäuses (24) verschiebbar gehalten ist.

## Claims

1. A motorcycle, in which the front wheel is arranged on the frame of the motorcycle via a spring damping system, and in which the spring damping system acts upon a gas pressure chamber, which on braking of the motorcycle is connected, via a shut-off member with a pressure reservoir, characterized in that the shut-off member is designed as a regulating valve (5) with a ventilation channel (33) for the gas pressure chamber (23) and with a shut-off slider (25), which is able to be displaced through the deceleration of the motorcycle (1), and is in pressure connection with the gas pressure chamber (23), and which in its position of rest shuts off the supply line (7) from the pressure reservoir (6) to the gas pressure chamber (23) and frees the ventilation of the gas pressure chamber (23).

2. A motorcycle according to claim 1, characterized in that the regulating valve (5) has a valve housing (24) with connection lines for the supply of pressure gas and ventilation of the gas pressure chamber (23) and with a recessed through-bore (28a, b), into which the connection lines open, and that the shut-off slider (25) is constructed as an elongated piston with a shaft part (25a) and with at least one outer annular collar (25b, c) and is guided with these two sections in the recessed through-bore (28a, b).

3. A motorcycle according to claim 2, characterized in that the shut-off slider (25) has at least two outer annular collars (25b, 25c), which are arranged at a distance from each other, and that the shut-off slider with the shaft part (25a) controls the ventilation and with the annular collars (25b, c) controls the pressure supply of the gas pressure chamber (23).

4. A motorcycle according to claim 2 or 3, characterized in that the shut-off slider (25) is held in its position of rest by elastic force (35).

5. A motorcycle according to one of claims 1–4, characterized in that the shut-off slider (25) is able to be acted upon by an arrestable inertia mass (26).

6. A motorcycle according to claim 5, characterized in that the inertia mass (26) is held so as to be displaceable equiaxially to the shut-off slider (25) in the through-bore (28a, b) of the valve housing (24).

## Revendications

1. Motocyclette, dans laquelle la roue avant est disposée sur le châssis de motocyclette, par un système d'amortissement à ressort et dans laquelle le système d'amortissement à ressort charge une enceinte de pression de gaz, qui est reliée par un organe d'obturation, avec un accumulateur de pression, lors du freinage de la motocyclette, caractérisée en ce que l'ornage d'obturation est conçu comme une soupape de réglage (5), avec un canal de mise à l'air libre (33), pour l'enceinte de pression de gaz (23) et avec un tiroir de blocage (25) en liaison de pression avec l'enceinte de pression de gaz (23) et mobile du fait du ralentissement de la motocyclette (1) et qui, dans sa position de repos, obture la conduite d'alimentation (7) allant de l'accumulateur de pression (6), vers l'enceinte de pression de gaz (23) et libérant la mise à l'air libre de l'enceinte de pression de gaz (23).

2. Motocyclette selon la revendication 1, caractérisée en ce que la soupape de réglage (5) présente un carter de soupape (24) avec des tuyauteries de raccordement pour l'alimentation en pression de gaz et la mise à l'air libre de l'enceinte de pression de gaz (23) et avec un alésage traversant (28a, b) étagé, dans lequel débouchent les conduites de raccordement et que le tiroir de blocage (25) est exécuté en piston allongé, avec une partie d'axe (25a) et au moins une collerette annulaire (25b, c), extérieure et guidé avec ces deux sections dans l'alésage traversant (28a, b), étagé.

3. Motocyclette selon la revendication 2, caractérisée en ce que le tiroir de blocage (25) présente au moins deux collerettes annulaires (25b, c) disposées à distance l'une de l'autre et que l'accumulateur de pression avec la partie de l'axe (25a) commande la mise à l'air libre et avec les collerettes annulaires (25b, c), l'alimentation de pression de l'enceinte de pression de gaz (23).

4. Motocyclette selon la revendication 2 ou 3, caractérisée en ce que le tiroir de blocage (25) est maintenu dans sa position de repos, par la force de ressort (35).

5. Motocyclette selon l'une des revendications 1 à 4, caractérisée en ce que le tiroir de blocage (25) est soumis à l'action d'une masse d'inertie (26), qui est blocable.

6. Motocyclette selon la revendication 5, caractérisée en ce que la masse d'inertie (26) est maintenue mobile sur le même axe, par rapport au tiroir de blocage (25), dans l'alésage traversant (28a, b) du carter de soupape (24).

0156293

Fig.1

Fig.2

7

_Fig.3_